# EUROPEAN PATENT SPECIFICATION

(11) **EP 0 449 414 B1**
(45) Date of publication and mention of the grant of the patent: **04.09.1996**
(21) Application number: 91301328.0
(22) Date of filing: 20.02.1991
(51) Int. Cl.: B32B 31/00, B32B 19/06, E04C 2/16

(54) **Manufacture of mineral fibre products in layer form**
Herstellung von schichtförmigen Mineralfaserprodukten
Fabrication de produits de fibres minérales en couches

(30) Priority: 22.02.1990 GB 9004018
(43) Date of publication of application: 02.10.1991
(73) Proprietor: SIDERISE (HOLDINGS) LIMITED, Hadleigh, Suffolk IP7 6BQ (GB)
(72) Inventor: Bond, Stephen William, London SW 19 (GB)
(74) Representative: Stoner, Gerard Patrick

(56) References cited:
- EP-A- 0 017 969
- EP-A- 0 396 306
- DE-A- 2 303 320
- DE-U- 8 505 179
- DE-U- 8 532 239
- FR-A- 2 393 680
- FR-A- 2 418 082
- FR-A- 2 592 416
- FR-A- 2 639 386
- US-A- 3 082 143
- US-A- 4 567 078
- US-A- 4 632 685
- DATABASE WPIL, accession no. 90-104981 [14], Derwent Publications Ltd, London, GB; & JP-A-02 057 333 (SEKISUI) 27-02-1990
- DATABASE WPI, accession no. 79-28691B [15], Derwent Publications Ltd, London, GB; & JP-A-54 029 383 (DIABOND KOGYO K.K.) 05-03-1979

## Description

This invention relates to the manufacture of products in layer form, for example panels providing thermal and/or acoustic insulation or for constructional purposes. Generally the end-products have an inner layer of man-made mineral fibre bonded between relatively impermeable outer sheet layers.

For some years, constructional panels commonly consisted of foamed plastics between e.g. metal outer sheets. More recently, concern over fire risks and chlorofluorocarbon (CFC) risks associated with foamed plastics has led to increasing use of other inner layer materials. One such is man-made mineral fibre e.g. rock or glass fibre.

These fibre materials and their fire-proofing and insulating qualities are well known. They are generally commercially available in layer form in which, because of the manufacturing process, the fibres are oriented predominantly in one direction in the plane of the layer.

Firstly, fibre layers cannot be sandwiched directly between outer sheets to make panels because they have inadequate strength out of their own planes owing to the fibre orientation. The sheets would be liable to being pulled apart, disintegrating the fibre layer. Instead, it has become known to cut the fibre layer product into transverse slices, or "lamellae", in which short fibres lie transversely to the lamella plane. The lamellae can be laid flat in an edge-to-edge array and the outer sheets bonded to the surfaces they present. This provides the necessary layer integrity, but introduces difficulties of bonding to the "end-on" fibres in the lamellae. Also, the lamellae are generally only 100-200mm wide since that is the maximum commercially available thickness of fibre layer material. Therefore many lamellae are needed to make a panel of any substantial size.

Secondly, since the insulation properties of the panels are usually important, it is important to avoid gaps between lamellae. This problem has already been addressed in the known art by compressing the lamellae edge-to-edge in an array before they are incorporated in the layer product. To keep the array compressed, it is known to spread intermediate retaining layers of e.g. glass fibre fabric over one or both faces, sticking them on using spray-applied adhesive, so that the array can subsequently be removed from the compression means and handled as a separate intermediate product. The outer sheet layers (e.g. of metal) are stuck on later, using an adhesive which penetrates to some extent through the open glass fibre fabric and onto the lamellae. However, secure bonding is difficult to achieve.

EP-A-17969 describes the use of lamellae to make insulating panels having plaster or cement cover layers. A continuous manufacture process is disclosed for an intermediate product, whereby a series of lamellae positioned edge-to-edge is conveyed through an application station where an open-mesh net, to which adhesive has previously been applied, is adhered to one or both faces of the series so that the adhesive is confined to the net fibres and the net remains permeable.

In one aspect we provide a method of making an intermediate mineral fibre product in which a respective permeable retaining layer is adhered to one or both faces of an array of mineral fibre lamellae to hold the array together, the array being formed continuously with conveying of the lamellae sequentially by a conveyor, and the retaining layer being adhered by fusing a plastics adhesion layer to form an open, permeable adhesion pattern between the retaining layer and the lamellae
characterised in that
the array is formed by conveying the lamellae sequentially from a first conveyor to a second conveyor which imposes on the lamellae a conveying speed slower than that of the first conveyor, thereby compressing the lamellae together edge-to-edge in the conveying direction, and the adhered retaining layer holds the lamellae together in the edge-to-edge compressed condition.

Thus, we stick the intermediate retaining layer onto the edge-to-edge compressed array of lamellae using a heat-fusible layer adhesive e.g. in the form of a net or web. This differs from the previous technique of spraying wet adhesive onto the fibres in that it produces an open pattern of adhesion overall - usually either a network of fused filaments, or spots regularly spaced from one another - rather than flooding the fibre ends at the lamella surface as in the prior art. As a result, penetration of secondary adhesive into the lamellae, past the first adhesive, is greatly improved when the final outer sheet layers are bonded on. Consequently, the final product can be much stronger.

Heat-fusible nets and webs for adhesive purposes are known, and the skilled man will be able to select a type appropriate for the fibre material and intermediate retaining layer material used. Suitable fusion temperatures might be, for example, in the range 80°-160°C.

Generally a "net" means a regular layer of crossing filaments, usually fused together at their crossings although they may cross freely as in a woven fabric.

Conversely, "web" is used here with its usual sense in this adhesive art i.e. as meaning a layer of filaments substantially randomly arranged to give a tissue of relatively open structure.

As mentioned above, these are known materials, and are known for sticking together e.g. two fabric layers in clothing so that air can permeate through. The present proposals apply them instead to mineral-fibre layers, with the purpose of allowing a further adhesive to permeate through and adhere a further layer all the way through to the fibre substrate.

The retaining layer may be of a type already known, e.g. a coarse weave glass fibre fabric providing fairly high permeability. However, other materials are possible. In one version, the retaining layer comprises a non-fusing plastics net laid over the heat-fusible layer, and having a higher melting point so that it is substantially undamaged by the temperature required to melt the adhesive layer. In a possible refinement of this version, the retaining layer is a plastics net formed integrally with the fusible adhesive. The net filaments may be co-formed e.g. by coextrusion, to consist of two different plastics having different melting points. With appropriate selection of the respective melting properties and thickness of the two co-formed filament components, a net can be produced which is laid as a single layer onto the lamellae and subjected to heating at a predetermined temperature. As a result, the lower melting point plastics fuses and adheres the other plastics (which retains its integrity as a net) to the lamella array. Coextruded nets of this type are commercially available.

A net-type plastics retaining layer is more easily and uniformly penetrated by the adhesive used to bond the outer sheets. It is also cheaper. However, fabrics have a strength advantage.

In another aspect we provide an intermediate mineral fibre product obtainable by a method as described above, and comprising the permeable retaining layer adhered to one or both faces of the array of mineral fibre lamellae by an open, permeable adhesion pattern formed by fusing the plastics adhesion layer, the lamellae being compressed together edge-to-edge and held in that edge-to-edge compressed condition by the adhered retaining layer.

A further aspect is a mineral fibre panel product obtainable by adhering a stiff outer layer to one or both faces of the intermediate product by an adhesive which permeates through the retaining layer of the intermediate product and its adhesion pattern, into the fibrous surface of the lamella array.

A further aspect is apparatus for continuously forming an intermediate mineral fibre product, comprising:
a conveyor path along which mineral fibre lamellae are conveyed sequentially, and having a faster conveyor leading to a lower conveyor so that lamellae on the conveyor path are compressed edge-to-edge between the faster and slower conveyors;
a supply for heat-fusible adhesive in layer form, and means for applying the adhesive in layer form to one or both surfaces of the edge-to-edge compressed lamellae;
means for applying a permeable retaining layer to said one or both surfaces of the lamellae, either together with or separately from the layer adhesive, and
at least one heater for fusing the layer adhesive to adhere the retaining layer to the lamellae.

The conveyors grip the lamellae sufficiently firmly for the change in speed to cause them to be compressed together, in the conveying direction, at the transition from one conveyor to the other. The retaining layer material, for holding the lamellae compressed in the intermediate product, may be laid onto them at or near the transition point, or at some subsequent station at which they are still in their compressed state.

In this way, it is possible to prepare the layer product in a continuous manner, whereas previously it was necessarily made in batches with the lamellae compressed by a frame or the like. Therefore there are advantages of speed and economy.

The fusible adhesive layer may be laid into the conveyor path, for example from a roll, at or after the compressing transition. The retaining layer itself (where not in one piece with the adhesive) may be laid on at the same station or subsequently. Means are preferably provided for heating to cause the fusing of the adhesive and adhesion of the retaining layer. A heating station or stations may be provided and/or subsequent to the location of the application of the fusible layer. Preferably heating occurs as the layer is engaged by a conveyor. This may be a separate heating conveyor following the second, or may be the second conveyor itself.

Possible means for heating include infrared radiation, which has the advantage that it can be cheaply and uniformly e.g. through an IR-permeable conveyor structure. Heated elements, e.g. hot rollers, are also useful. A combination of the above may be used.

The retaining layer may be applied over the fusible layer either before or after fusing thereof.

The conveyors themselves are advantageously belts or rollers, in particular opposed belts, opposed rollers or opposed sets of rollers between which the lamellae can be gripped positively.

Normally the retaining layers and adhesive will be applied to the lamella array on both faces simultaneously. In some cases, particularly where a curved panel is desired, a layer may be applied on one face only.

One or more stabilising elements, e.g. plates, bars, rollers, or running belts, may be provided adjacent the conveyor path at transition(s) between conveyors to reduce any tendency of the lamellae to buckle under compression.

Also, cooling means may be provided downstream of the heating means. In some cases, ambient cooling along the conveyor path may suffice. In other cases, it may be preferred to provide cooling apparatus such as cooling blowers and/or cooled rollers or belts.

Embodiments of the invention are now described by way of example, with reference to the accompanying drawings in which:
Fig. 1 shows a mineral fibre product and lamellae;
Fig. 2 shows three lamellae, adhesive layers and retaining layers being made up into an intermediate inner layer product;
Figs. 2a and 2b show fused adhesive patterns.
Fig. 3 shows the intermediate layer product;
Fig. 4 shows enlarged a co-extruded net filament;
Fig. 5 shows schematically an apparatus for forming the intermediate layer product;
Fig. 6 shows a different form of apparatus, and
Fig. 7 shows a final layer product.

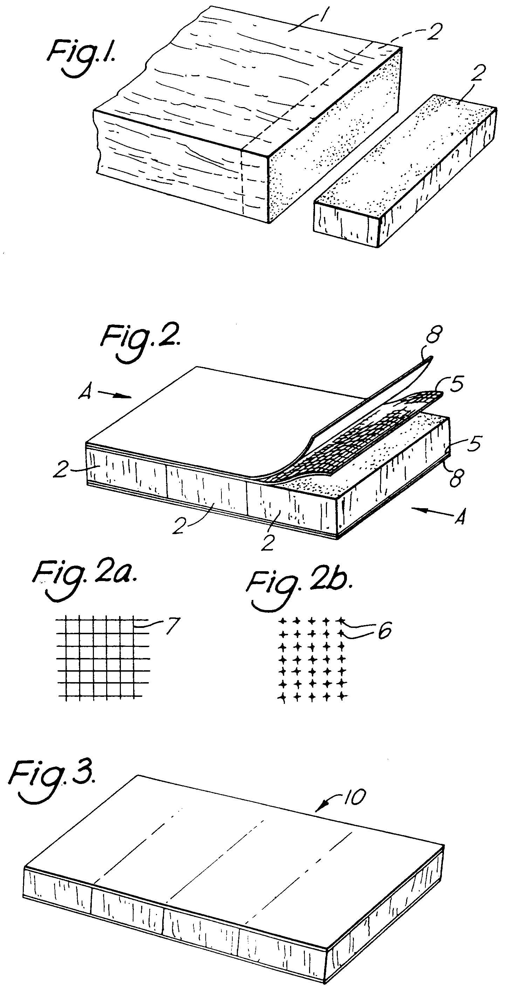

In Figure 1 is shown a piece 1 of commercially available mineral fibre layer e.g. "Rockwool" (trade mark), a rock fibre made by Rockwool International. The drawing indicates how the packed fibres of the material are oriented primarily longitudinally in the plane of the layer. By cutting the material into transverse slices - see the broken line - the commercial material can be converted into lamellae 2, usually 100-200 mm wide and 1000-1500 mm long.

Fig. 2 shows lamellae 2 positioned edge to edge and held compressed in direction A by a known compressing device (not shown) such as a retaining frame. For purposes of illustration only three lamellae have been shown, but in reality the number might be 5-20, resulting in a product perhaps 1-2 m long, 1-1.5 m wide.

Two layers are being spread over the surface of the three-lamella array. The layer 5 being spread directly onto the surface is a heat-fusible plastics net, such as are commercially available from Smith & Nephew Plastics Limited. A retaining or holding layer 8, e.g. a glass fabric, is superimposed on the plastics net 5 and spreads over the array. One suitable fabric has weight of 64 gsm, strand thickness 0.13 mm, warp no.= 89 and weave no.= 82. Subsequently heat is applied onto the holding layer 8, e.g. using a heated belt or platen, at a temperature of from e.g. 80-160°C, with the result that the net fuses and sticks the holding layer 8 onto the surface of the array. Figs. 2a and 2b show that, on fusing, the net 5 may either keep its network form, or form a pattern of fused spots 6 corresponding to the nodes of the net.

Since the mesh of the net 5 is generally small, i.e. of the order of 2 mm or less, a very large number of fused adhesive spots 6 or filaments 7 are formed, nevertheless allowing a good permeability through to the end-on fibre surface of the lamellae. The holding layer 8 is sufficiently strong and well stuck to keep the lamellae 2 in their compressed condition. Usually a corresponding holding layer 8 is applied to the opposite surface of the array. The two holding layers 8 may be applied separately or simultaneously. The result is an intermediate inner layer product 10 of the type shown in Fig. 3, which can itself be transported or stored for subsequent make-up into panels as will be described below.

Instead of a net of fusible adhesive, it is possible instead to use a web with a random filament arrangement. The choice of material for the web depends on the process conditions to be used and on the material of the retaining layer. These heat-fusible adhesive webs are commercially available materials e.g. under the trademark SHARNET from Applied Extrusion Technologies Inc. of Middletown, Delaware, USA. Webs are available made of polyester, polyolefin, polyamide or polyurethane.

In another embodiment the holding layer 8 is not a glass cloth but a plastics net able to withstand the heating conditions used to fuse the adhesive net. A suitable holding net might be made, for example, of polypropylene of mesh size 1-3 mm. Once stuck on, the resulting surface structure is highly permeable.

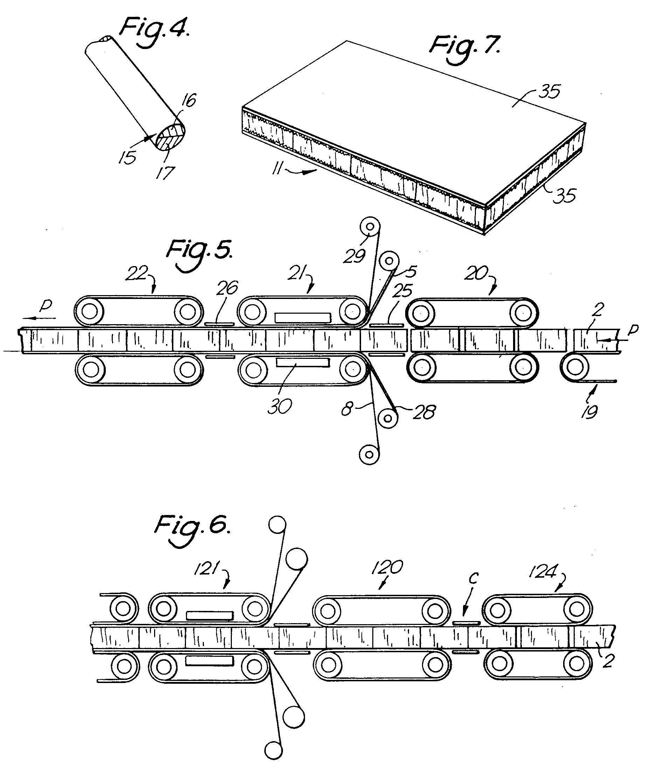

A further option is to use only a single net material for each face of the array, consisting of two types of plastics material coextruded together. Fig. 4 shows schematically a filament 15 from such a material with an upper plastics material 16 e.g. polypropylene, of high melting point and a lower plastics material 17 of lower melting point which may be e.g. polyethylene or a complex polymer. A layer of this is applied to the surface of the lamella array and heat applied, whereupon the low melting point plastics fuses and sticks the net of high melting point plastics to the fibre material. The high melting point net then serves as a holding layer 8 for the compressed lamellae 2.

Figure 5 shows schematically an apparatus for continuous production of intermediate layer material. The apparatus comprises (from right to left) a feed conveyor 19, a pair of gripping belts 20, a pair of heating belts 21 and a pair of cooling belts 22.

The conveyor and belts are driveable at predetermined speeds to convey lamellae 2 along a path P from right to left. The heating belts 21 and cooling belts 22 are arranged to be driven more slowly than the gripping belts 20, by about 5% for example but in any case controllably. In each pair of belts the belts are spaced so that the lamellae 2 are gripped firmly between them, with the consequence that the belt speed is imposed on the lamellae. The transition gap between the gripping and heating belts 20,21 is provided above and below with a pair of longitudinal stabilising elements 25, shown as flat plates above and below the conveyor path.

Positioned above and below the conveyor path adjacent the transition gap are mountings for rolls of heat-fusible plastics net material (inner rolls) 28 and for retaining or holding layer material (outer rolls) 29. The material from the rolls is led into the nip of the upstream end of the heating belts 21, with the retaining layer material 8 outermost.

In operation, lamellae 2 are fed continuously edge-to-edge into the gripping belts 20 by the feed conveyor 19. The gripping belts convey them to the transition gap where they pass into the heating belts 21, which impose on them a slower speed. As a result, the lamellae 2 are compressed together in the direction P, and the grip of the belts prevents them from sliding out of compression. The stabilising elements 25 at the transition prevent them from buckling out of the conveyor path as they are first compressed. Simultaneously with entering the heating belts 21, the two layers 5,8 described are applied to the two faces of the now-compressed series of lamellae. Heaters 30 provided in the heating belts cause the fusible net to fuse, thereby sticking the holding layer onto the lamellae.

Finally, the composite layer passes from the heating belts 21 to the cooling belts 22 which travel at the same speed, where the bond formed by the fused adhesive is finally set. An additional set of stabilising elements 26 prevents buckling at this point also. The layer product 10 emerges at the end and can be cut into suitable lengths for storage, transport or immediate make-up into panels.

The operation of the embodiment of Fig. 5 is dependent on there being little or no slip between the lamellae 2 and the heating belts 21. However, it is desirable to have a heating belt surface which will not stick while withstanding heat. Polytetrafluorethylene is a suitable material, but is rather slippery. The result is that the thrust caused by attempted compression of the lamellae entering the heating belts produces slipping and ineffective compression.

Fig. 6 shows a modification which does not have this problem. An extra set of gripping belts 124 is provided before the heating belts, the second set 120 being driven slower than the first 124. The heating belts 121 are driven at the same speed as the second set of gripping belts 120. As a result, compression of the lamellae 2 occurs at C between the two sets of high-friction gripping belts and they are already compressed when they arrive at the transition to the heating belts. The compression thrust is taken up between the two sets of gripping belts and cannot cause slipping at the heated stage.

For making up into panels, outer sheet layers 35, e.g. steel or aluminium sheets, are applied to the two faces of the layer product and stuck to it using a foaming adhesive such as a filled foaming polyurethane. This foaming adhesive penetrates through the open structure provided by the holding layer and fused adhesive, and into the fibrous surface region all over the lamella array. This provides a secure bond to hold the final product, e.g. a building panel 11, together.

It will be appreciated that the apparatus described above and corresponding method steps may be modified in a number of ways.

For example, the apparatus described uses belt conveyors for moving the lamellae along the conveyor path. However, we envisage that all or some of these conveyors may instead be rollers. In particular, opposed series of powered rollers can be used.

The embodiment of Fig 6 illustrates that the location of applying the adhesive and retaining layers is variable. It should also be appreciated that these layers need not be applied at the same station. The application of the adhesion layer 5 may be spaced substantially upstream from that of the retaining layer 8. Indeed, these locations may be separated by one or more conveyors. Such a conveyor between the locations may include heating means so that the adhesive layer can be heated without the retaining layer 8 in between. To prevent undesirable adhesion of heated adhesive to the conveyor, the conveyor e.g. rollers or belts can be provided with a non-stick surface e.g. PTFE.

In the above description, the heaters 30 are not described in great detail. One useful possibility is to use infrared radiation directed onto the conveyor path. This might be at an open section of the path, or through a conveyor as shown. A conveyor with a belt can be made with an open mesh to allow this. In particular, this works best when the radiation acts on the adhesion layer 5 as yet uncovered by the retaining layer 8.

Another possibility for heating the adhesive is the use of hot rollers. These might be heated by steam or hot liquid in a known manner, or by electrical filaments.

The provision of accurately uniform heating using hot rollers is more difficult and expensive than the use of infrared radiation. Therefore one proposal is to use radiation for an initial phase of the heating e.g. towards but not over the melting point of the adhesive, and then use a hot roller or rollers to cause the final melting. Such a hot roller could be inserted e.g. at a position corresponding to that of the interrupter element 26 in Fig 5.

In the embodiments shown in the figures, cooling of the intermediate product after adhesion of the retaining layer occurs simply by ambient heat exchange. The non-heated rollers 22 help this. However it is possible also to provide specific means for cooling the product more quickly. One possibility is cooled rollers e.g. a single large roller cooled by recirculating refrigerated water. Another possibility, which could be used in combination, is the blowing of cold air onto the intermediate product as it passes along the conveyor path. As with the infrared radiation, air could be blown onto the product through an open-weave fabric conveyor belt, or between rollers of a conveying set.

## Claims

1. A method of making an intermediate mineral fibre product in which a respective permeable retaining layer (8) is adhered to one or both faces of an array of mineral fibre lamellae (2) to hold the array together, the array being formed continuously with conveying of the lamellae (2) sequentially by a conveyor, and the retaining layer (8) being adhered by fusing a plastics adhesion layer (5) to form an open, permeable adhesion pattern between the retaining layer (8) and the lamellae (2),
characterised in that
the array is formed by conveying the lamellae (2) sequentially from a first conveyor (20) to a second conveyor (21) which imposes on the lamellae (2) a conveying speed slower than that of the first conveyor, thereby compressing the lamellae (2) together edge-to-edge in the conveying direction, and the adhered retaining layer (8) holds the lamellae (2) together in the edge-to-edge compressed condition.

2. A method according to claim 1 in which the adhesion layer (5) is a net or web, fused after application of the adhesion layer (5) and retaining layer (8) to the lamella array.

3. A method according to claim 1 or claim 2 in which the retaining layer is a glass fabric or a plastics net.

4. A method according to any one of the preceding claims in which the retaining layer and the plastics adhesion layer are provided integrally together as a net made from net filaments co-formed from a non-fusing plastics which forms a retaining net and a lower-melting plastics which fuses to stick the retaining net to the lamellae array.

5. A method according to claim 4 in which the filaments (15) of the net are co-extruded filaments.

6. A method according to any one of the preceding claims in which the adhesion layer (5) is applied continuously to the series of compressed lamellae (2) as it is conveyed.

7. A method according to any one of the preceding claims in which the lamellae (2) are 100-200mm wide by 1000-1500mm long.

8. A method according to any one of the preceding claims in which the adhesion layer is a net and the fusing of the adhesion layer (5) forms a pattern of fused adhesive spots (6) corresponding to the nodes of the net.

9. A method according to any one of the preceding claims in which the retaining layer (8) is a plastics net of mesh size 1 to 3mm.

10. A method according to any one of the preceding claims in which heat is applied to the array to fuse the adhesion layer (5) where the array is gripped by a conveyor (21,121).

11. A method according to claim 10 in which the conveyor (121) where the heating occurs is downstream of the second conveyor (21).

12. A method according to any one of the preceding claims in which the conveyors comprise opposed belts or rollers.

13. A method of making a mineral fibre panel product (11) comprising forming an intermediate product in a manner as defined in any one of claims 1 to 12, and adhering a stiff outer layer (35) to one or both faces of the intermediate product with an adhesive which penetrates through the permeable retaining layer (8) and open adhesion pattern thereof, into the fibrous surface of the lamella array.

14. A method according to claim 13, in which the stiff outer layer (35) is steel or aluminium sheet and is adhered to both faces of the intermediate product.

15. A method according to claim 13 or 14 in which the adhesive is a foaming adhesive.

16. An intermediate mineral fibre product obtainable by a method according to any one of claims 1 to 12, comprising a permeable retaining layer (8) adhered to one or both faces of an array of mineral fibre lamellae (2) by an open, permeable adhesion pattern formed by fusing a plastics adhesion layer (5), the lamellae (2) being compressed together edge-to-edge and held in that edge-to-edge compressed condition by the adhered retaining layer (8).

17. A mineral fibre panel product obtainable by a method according to claim 14 or 15, comprising an intermediate mineral fibre product as defined in claim 16 with a stiff outer layer (35) adhered to one or both faces of the intermediate product by an adhesive which permeates through the retaining layer (8) of the intermediate product and its adhesion pattern, into the fibrous surface of the lamella array.

18. Apparatus for continuously forming an intermediate mineral fibre product, comprising:
a conveyor path along which mineral fibre lamellae (2) are conveyed sequentially, and having a faster conveyor (20) leading to a slower conveyor so that lamellae (2) on the conveyor path are compressed edge-to-edge between the faster and slower conveyors (20,21);
a supply of heat-fusible adhesive in layer form, and means for applying the adhesive in layer form to one or both surfaces of the edge-to-edge compressed lamellae (2);
means (29) for applying a permeable retaining layer (8) to said one or both surfaces of the lamellae (2), either together with or separately from the layer adhesive, and
at least one heater (30) for fusing the layer adhesive (5) to adhere the retaining layer (8) to the lamellae (2).

19. Apparatus according to claim 18 in which the at least one heater (30) comprises an infra-red radiant heater.

20. Apparatus according to claim 18 or claim 19 in which the conveyors comprise opposed belts or rollers.

21. Apparatus according to any one of claims 18 to 20 in which the heater (30) is at a heating station downstream of the slower conveyor (120).

22. Apparatus according to any one of claims 18 to 21, comprising retaining elements (26) positioned adjacent the conveyor path between conveyors (20,21,22) of the apparatus, for resisting buckling of compressed lamellae (2) away from the conveyor path.

## Patentansprüche

1. Verfahren zur Herstellung eines Mineralfaser-Zwischenproduktes, bei dem eine jeweilige durchlässige Rückhalteschicht (8) an eine oder beide Flächen einer Anordnung von Mineralfaserlamellen (2) geklebt wird bzw. anhaftet, um die Anordnung zusammenzuhalten, wobei die Anordnung kontinuierlich ausgebildet wird, indem die Lamellen (2) sequentiell von einem Förderer befördert werden und die Rückhalteschicht (8) durch Schmelzen einer Kunststoffhaftschicht (5) angehaftet wird, um ein offenes, durchlässiges Haftungsmuster zwischen der Rückhalteschicht (8) und den Lamellen zu bilden,
dadurch gekennzeichnet, daß
die Anordnung gebildet wird, indem die Lamellen (2) sequentiell von einem ersten Förderer (20) zu einem zweiten Förderer (21) befördert werden, der die Lamellen (2) einer langsameren Beförderungsgeschwindigkeit unterwirft als der erste Förderer, wodurch die Lamellen in der Beförderungsrichtung Kante an Kante zusammengepreßt werden, und die angehaftete Rückhalteschicht (8) die Lamellen im zusammengepreßten Zustand Kante an Kante zusammenhält.

2. Verfahren nach Anspruch 1, bei dem die Haftschicht (5) ein Netz oder Gewebe ist, das nach dem Aufbringen der Haftschicht (5) und der Rückhalteschicht (8) auf die Lamellenanordnung geschmolzen wird.

3. Verfahren nach Anspruch 1 oder 2, bei dem die Rückhalteschicht ein Glasfaser- oder ein Kunststoffnetz ist.

4. Verfahren nach einem der vorangegangenen Ansprüche, bei dem die Rückhalteschicht und die Kunststoffhaftschicht einstückig gemeinsam als ein Netz aus Netzfilamenten bereitgestellt werden, die gemeinsam aus einem nichtschmelzenden Kunststoff, der ein Rückhaltenetz bildet, und einem niedriger schmelzenden Kunststoff gebildet werden, der schmilzt, sodaß das Rückhaltenetz an die Lamellenanordnung geklebt wird.

5. Verfahren nach Anspruch 4, bei dem die Filamente (15) des Netzes koextrudierte Filamente sind.

6. Verfahren nach einem der vorangegangenen Ansprüche, bei dem die Haftschicht (5) kontinuierlich auf eine Abfolge zusammengepreßter Lamellen (2) aufgebracht wird, während diese befördert wird.

7. Verfahren nach einem der vorangegangenen Ansprüche, bei dem die Lamellen (2) 100-200 mm breit und 1.000-1.500 mm breit sind.

8. Verfahren nach einem der vorangegangenen Ansprüche, bei dem die Haftschicht ein Netz ist und durch das Schmelzen der Haftschicht (5) ein Muster aus geschmolzenen Haftpunkten (6) gebildet wird, die den Knoten des Netzes entsprechen.

9. Verfahren nach einem der vorangegangenen Ansprüche, bei dem die Rückhalteschicht (8) ein Kunststoffnetz mit der Maschenweite von 1 bis 3 mm ist.

10. Verfahren nach einem der vorangegangenen Ansprüche, bei dem auf die Anordnung Hitze angewandt wird, um die Haftschicht (5) dort zu schmelzen, wo die Anordnung von einem Förderer (21, 121) gehalten wird.

11. Verfahren nach einem der Ansprüche 10, bei dem sich der Förderer (121), wenn das Erhitzen stattfindet, stromab vom zweiten Förderer (21) befindet.

12. Verfahren nach einem der vorangegangenen Ansprüche, bei dem die Förderer gegenüberliegende Bänder oder Laufrollen umfassen.

13. Verfahren zur Herstellung eines Mineralfaser-Tafelerzeugnisses (11), umfassend das Ausbilden eines Zwischenerzeugnisses auf eine Weise, wie nach einem der Ansprüche 1 bis 12 definiert, und das Ankleben einer steifen Außenschicht (35) an eine oder beide Flächen des Zwischenerzeugnisses mit einem Haftmittel , das durch die durchlässige Rückhalteschicht (8) und deren offenes Haftmuster in die faserige Oberfläche der Lamellenanordnung dringt.

14. Verfahren nach Anspruch 13, bei dem die steife Außenschicht (35) Stahl- oder Aluminiumfolie ist und an beide Flächen des Zwischenerzeugnisses geklebt wird.

15. Verfahren nach Anspruch 13 oder 14, bei dem das Haftmittel ein schäumendes Haftmittel ist.

16. Mineralfaserzwischenerzeugnis, das durch ein Verfahren nach einem der Ansprüche 1 bis 12 erhalten werden kann, umfassend eine durchlässige Rückhalteschicht (8), die durch ein durch Schmelzen einer Kunststoffhaftschicht (5) gebildetes offenes, durchlässiges Haftmuster an eine oder beide Flächen einer Anordnung von Mineralfaserlamellen (2) geklebt ist, wobei die Lamellen (2) Kante an Kante aneinandergepreßt sind und durch die angebundene Rückhalteschicht (8) in diesem Zustand des Kante - an - Kante - Aneinandergepreßtseins gehalten werden.

17. Mineralfaser-Tafelerzeugnis, das durch ein Verfahren nach einem der Ansprüche 14 oder 15 erhalten werden kann, umfassend ein Mineralfaser-Zwischenerzeugnis nach Anspruch 16 mit einer steifen Außenschicht (35), die durch ein Haftmittel, das durch die Rückhalteschicht (8) des Zwischenerzeugnisses und sein Haftmuster in die faserige Oberfläche der Lamellenanordnung eindringt, an eine oder beide Flächen des Zwischenerzeugnisses geklebt ist.

18. Vorrichtung zum kontinuierlichen Ausbilden eines Mineralfaser-Zwischenerzeugnisses, umfassend:
eine Förderstrecke, entlang der Mineralfaserlamellen (2) sequentiell befördert werden und die einen schnelleren Förderer (20) aufweist, der zu einem langsameren Förderer führt, sodaß Lamellen (2) auf der Förderstrecke zwischen dem schnelleren und dem langsameren Förderer (20, 21) Kante an Kante aneinandergepreßt werden,
eine Zufuhr für heißschmelzendes Haftmittel in Schichtform und Mittel zum Aufbringen des Haftmittels in Schichtform auf eine oder beide Oberflächen der Kante an Kante aneinandergepreßten Lamellen (2);
Mittel (29) zum Aufbringen einer durchlässigen Rückhalteschicht (8) auf die eine oder auf beide Oberflächen der Lamellen (2), entweder gemeinsam mit oder getrennt von der Haftmittelschicht, und
zumindest eine Heizeinrichtung (30) zum Schmelzen der Haftmittelschicht (5), um die Rückhalteschicht (8) an die Lamellen (2) zu kleben.

19. Vorrichtung nach Anspruch 18, bei der die zumindest eine Heizeinrichtung (30) einen Infrarotheizstrahler umfaßt.

20. Vorrichtung nach Anspruch 18 oder 19, bei der die Förderer gegenüberliegende Bänder oder Laufrollen umfassen.

21. Vorrichtung nach einem der Ansprüche 18 bis 20, bei der sich die Heizeinrichtung (30) an einer Heizstation stromab vom langsameren Förderer (120) befindet.

22. Vorrichtung nach einem der Ansprüche 18 bis 21, umfassend Rückhalteelemente (26), die an die Förderstrecke zwischen den Förderern (20, 21, 22) der Vorrichtung angrenzend angeordnet sind, um einem Wegknicken der aneinandergepreßten Lamellen (2) von der Förderstrecke Widerstand entgegenzusetzen.

## Revendications

1. Méthode de fabrication d'un produit en fibres minérales intermédiaire dans laquelle une couche de rétention perméable respective ( 8) est adhérée à une ou les deux faces d'une série de lamelles de fibres minérales (2) pour maintenir la série ensemble, la série étant formée de façon continue avec le convoyage des lamelles (2) séquentiellement pas un convoyeur, et la couche de rétention (8) étant adhérée par fusion d'une couche d'adhésion en plastique (5) pour former un motif d'adhésion perméable, ouvert, entre la couche de rétention (8) et les lamelles (2),
caractérisée en ce que
la série est formée par convoyage des lamelles (2) séquentiellement à partir d'un premier convoyeur (20) vers un second convoyeur (21) qui impose sur les lamelles (2) une vitesse de convoyage plus lente que celle du premier convoyeur, compressant ainsi les lamelles (2) ensemble bord à bord dans la direction de convoyage, et la couche de rétention adhérée (8) maintient les lamelles (2) ensemble dans un état compressé bord à bord.

2. Méthode selon la revendicaiton 1, dans laquelle la couche d'adhésion (5) est un filet ou une bande tissée, fusionnée après application de la couche d'adhésion (5) et de la couche de rétention (8) à la série de lamelles.

3. Méthode selon la revendication 1 ou la revendication 2, dans laquelle la couche de rétention est un tissu de verre ou un filet de plastique.

4. Méthode selon l'une quelconque des revendications précédentes, dans laquelle la couche de rétention et la couche d'adhésion en plastique sont prévues intégralement ensemble en tant que filet fait de filaments de filet co-formés à partir d'un plastique non-fusionnant qui forme un filet de rétention et d'un plastique à fusion plus faible qui fusionne pour coller le filet de rétention à la série de lamelles.

5. Méthode selon la revendication 4, dans laquelle les filaments (15) du filet sont des filaments co-extrudés.

6. Méthode selon l'une quelconque des revendications précédentes, dans laquelle la couche d'adhésion (5) est appliquée en continu à la série de lamelles compressées (2) lorsqu'elle est convoyée.

7. Méthode selon l'une quelconque des revendications précédentes, dans laquelle les lamelles (2) ont une largeur de 100 à 200 mm par une longueur de 1000 à 1500 mm.

8. Méthode selon l'une quelconque des revendications précédentes, dans laquelle la couche d'adhésion est un filet et le fusionnement de la couche d'adhésion (5) forme un motif de taches adhésives fusionnées (6) correspondant aux noeuds du filet.

9. Méthode selon l'une quelconque des revendications précédentes, dans laquelle la couche de rétention (8) est un filet de plastique de taille de fil de 1 à 3 mm.

10. Méthode selon l'une quelconque des revendications précédentes, dans laquelle de la chaleur est appliquée à la série pour fusionner la couche d'adhésion (5) où la série est agrippée par un convoyeur (21, 121).

11. Méthode selon la revendication 10, dans laquelle le convoyeur (121),où le chauffage se produit, est en aval du second convoyeur (21).

12. Méthode selon l'une quelconque des revendications précédentes, dans laquelle les convoyeurs comprennent des ceintures ou des rouleaux opposés.

13. Méthode de fabrication d'un produit de panneau de fibres minérales (11) comprenant la formation d'un produit intermédiaire d'une manière telle que définie dans l'une quelconque des revendications 1 à 12, et l'adhésion d'une couche externe rigide (35) à l'une ou les deux faces du produit intermédiaire avec un adhésif qui pénètre à travers la couche de rétention perméable (8) et le motif d'adhésion ouvert de celle-ci, dans la surface fibreuse de la série de lamelles.

14. Méthode selon la revendication 13, dans laquelle la couche externe rigide (35) est une feuille d'acier ou d'aluminium et est adhérée aux deux faces du produit intermédiaire.

15. Méthode selon la revendication 13 ou 14, dans laquelle l'adhésif est un adhésif moussant.

16. Produit de fibres minérales intermédiaire que l'on peut obtenir par une méthode selon l'une quelconque des revendications 1 à 12, comprenant une couche de rétention perméable (8) adhérée à l'une ou les deux faces d'une série de lamelles de fibres minérales (2) par un motif d'adhésion perméable, ouvert, formé par fusionnement d'une couche d'adhésion en plastique (5), les lamelles (2) étant compressées ensemble bord à bord et maintenues dans cet état compressé bord à bord par la couche de rétention adhérée (8).

17. Produit de panneau de fibres minérales que l'on peut obtenir par une méthode selon la revendication 14 ou 15, comprenant un produit de fibres minérales intermédiaire tel que défini en revendication 16, avec une couche externe rigide (35) adhérée à l'une ou les deux faces du produit intermédiaire par un adhésif qui permée à travers la couche de rétention (8) du produit intermédiaire et son motif d'adhésion, dans la surface fibreuse de la série de lamelles.

18. Appareil pour former en continu un produit de fibres minérales intermédiaire, comprenant :
un chemin de convoyage le long duquel des lamelles de fibres minérales (2) sont convoyées séquentiellement, et ayant un convoyeur (20) plus rapide menant à un convoyeur plus lent, de sorte que les lamelles (2) sur le chemin du convoyeur sont compressées bord à bord entre les convoyeurs plus rapide et plus lent (20, 21) ;
une alimentation d'adhésif fusible thermiquement en forme de couche, et un moyen pour appliquer l'adhésif en forme de couche sur l'une ou les deux sur faces des lamelles compressées bord à bord (2) ;
un moyen (29) pour appliquer une couche de rétention perméable (8) sur l'une ou les deux surfaces des lamelles (2), soit ensemble soit séparément de l'adhésif de couche, et
au moins un calorifère (30) pour fusionner la couche adhésive (5) pour adhérer la couche de rétention (8) aux lamelles (2).

19. Appareil selon la revendication 18, dans lequel le au moins un calorifère (30) comprend un calorifère radiant à infra-rouges.

20. Appareil selon la revendication 18 ou la revendication 19, dans lequel les convoyeurs comprennent des ceintures ou des rouleaux opposés.

21. Appareil selon l'une quelconque des revendications 18 à 20, dans lequel le calorifère (30) est à une station de chauffage en aval du convoyeur plus lent (120).

22. Appareil selon l'une quelconque des revendications 18 à 21, comprenant des éléments de rétention (26) positionnés adjacents au chemin de convoyeur entre des convoyeurs (20, 21, 22) de l'appareil, pour résister au gondolement des lamelles compressées (2) au loin du chemin de convoyeur.
